(19) Europäisches Patentamt
European Patent Office
Office européen des brevets

(11) **EP 4 183 578 A1**

(12) **EUROPEAN PATENT APPLICATION**
published in accordance with Art. 153(4) EPC

(43) Date of publication:
**24.05.2023  Bulletin 2023/21**

(21) Application number: **21843146.8**

(22) Date of filing: **13.07.2021**

(51) International Patent Classification (IPC):
**B32B 27/10** *(2006.01)* **B32B 27/28** *(2006.01)*
**C08F 8/44** *(2006.01)* **C08J 3/03** *(2006.01)*
**C08L 23/08** *(2006.01)* **C08L 33/00** *(2006.01)*
**C09D 123/08** *(2006.01)* **C09D 133/00** *(2006.01)*
**C09D 7/61** *(2018.01)*

(52) Cooperative Patent Classification (CPC):
**B32B 27/10; B32B 27/28; C08F 8/44; C08J 3/03;
C08L 23/08; C08L 33/00; C09D 7/61;
C09D 123/08; C09D 133/00**

(86) International application number:
**PCT/JP2021/026203**

(87) International publication number:
**WO 2022/014548 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.07.2020  JP 2020120841
30.03.2021  JP 2021056440
30.03.2021  JP 2021056441**

(71) Applicant: **Sumitomo Seika Chemicals Co., Ltd.
Kako-gun, Hyogo 675-0145 (JP)**

(72) Inventors:
• **KAKUTAKA, Ikumi
Himeji-shi, Hyogo 672-8076 (JP)**
• **NOJIMA, Koyo
Himeji-shi, Hyogo 672-8076 (JP)**
• **MIZUHASHI, Toshinari
Himeji-shi, Hyogo 672-8076 (JP)**

(74) Representative: **Vossius & Partner
Patentanwälte Rechtsanwälte mbB
Siebertstraße 3
81675 München (DE)**

(54)  **RESIN DISPERSION COMPOSITION**

(57)    The invention provides an aqueous dispersion prepared by dispersing in water an olefin-α,β-unsaturated carboxylic acid copolymer having a relatively small amount of α,β-unsaturated carboxylic acid by using ammonia, and provides a production method for the aqueous dispersion. Specifically, the aqueous dispersion is an aqueous dispersion composition of a copolymer comprising an α,β-unsaturated carboxylic acid or an ester thereof as a constituent unit, the composition comprising ammonia, the copolymer having a heat of crystallization of -30 J/g or less, and the copolymer being present in an amount of 10 to 50 mass%.

EP 4 183 578 A1

**Description**

Technical Field

The present disclosure relates to a resin dispersion composition etc. The contents of all of the documents disclosed in the present specification are incorporated herein by reference.

Background Art

An aqueous dispersion of an olefin-$\alpha,\beta$-unsaturated carboxylic acid copolymer is known to be used as a coating agent for paper. Coated paper obtained by applying this aqueous dispersion to paper can have excellent heat-sealing properties and excellent defibration properties. In terms of olefin-$\alpha,\beta$-unsaturated carboxylic acid copolymers, the greater the amount of $\alpha,\beta$-unsaturated carboxylic acid, the easier it is to obtain an aqueous dispersion. However, the greater the amount of $\alpha,\beta$-unsaturated carboxylic acid, the lower the melting point and the lower the crystallinity, resulting in a tendency towards insufficient blocking resistance (thus, blocking easily occurs).

Among aqueous dispersions of olefin-$\alpha,\beta$-unsaturated carboxylic acid copolymers, a dispersion obtained by using an alkali metal compound to disperse the copolymer in water is most widely used since an aqueous dispersion of olefin-$\alpha,\beta$-unsaturated carboxylic acid copolymer in which the amount of $\alpha,\beta$-unsaturated carboxylic acid is relatively low, and in which the crystallinity is high is easily produced, and since the restrictions on the raw material copolymer are relatively loose.

However, coated paper obtained by applying this dispersion to a substrate (in particular, paper) has insufficient water resistance; thus, using this coated paper as is for applications that require water resistance is difficult.

On the other hand, coated paper obtained by applying a dispersion in which the copolymer is dispersed in water by using ammonia is advantageous in that the coated paper has relatively good water resistance; however, dispersing in water an olefin-$\alpha,\beta$-unsaturated carboxylic acid copolymer having a small amount of $\alpha,\beta$-unsaturated carboxylic acid by using ammonia is difficult.

Citation List

Patent Literature

PTL 1: JPS50-135141A
PTL 2: WO2016/076130
PTL 3: JP2001-139737A

Summary of Invention

Technical Problem

The present inventors conducted extensive research to obtain an aqueous dispersion by dispersing in water an olefin-$\alpha,\beta$-unsaturated carboxylic acid copolymer having a relatively small amount of $\alpha,\beta$-unsaturated carboxylic acid by using ammonia.

Solution to Problem

Even when ammonia is used to disperse in water an olefin-$\alpha,\beta$-unsaturated carboxylic acid copolymer having a relatively small amount of $\alpha,\beta$-unsaturated carboxylic acid, the present inventors found the possibility of obtaining an aqueous dispersion by using specific amounts of the copolymer. The inventors then made further improvements.

For example, the present disclosure encompasses the subject matter described in the following items.

Item 1.

An aqueous dispersion composition of a copolymer comprising an $\alpha,\beta$-unsaturated carboxylic acid or an ester thereof as a constituent unit,

the composition comprising ammonia,

the copolymer having a heat of crystallization of -30 J/g or less, and
the copolymer being contained in an amount of 10 to 50 mass%.

Item 2.

The composition according to Item 1, wherein the copolymer has an average particle size of 0.01 to 1 μm.

Item 3.

The composition according to Item 1 or 2, wherein the copolymer has a heat of crystallization of -30 to -55 J/g.

Item 4.

The composition according to any one of Items 1 to 3, which is a coating composition.

Item 5.

The composition according to any one of Items 1 to 4, having a water absorptiveness of 10 g/m$^2$ or less, the water absorptiveness being measured according to the Cobb method by using high-quality paper having a basis weight of 200 to 220 g/m$^2$, the high-quality paper being used 24 hours after the composition is applied to the paper to a coating film thickness of 5 μm and dried with hot air at 100°C for 5 minutes, and by setting a contact time of the coated paper with water to 5 minutes.

Item 6.

The composition according to any one of Items 1 to 5, wherein the α,β-unsaturated carboxylic acid is at least one member selected from a group consisting of acrylic acid, methacrylic acid, crotonic acid, maleic acid, fumaric acid, and itaconic acid, and
the ester of α,β-unsaturated carboxylic acid is a C$_1$-C$_{10}$ alkyl ester of α,β-unsaturated carboxylic acid.

Item 7.

The composition according to any one of Items 1 to 6, wherein the copolymer comprising the α,β-unsaturated carboxylic acid or the ester thereof as a constituent unit further comprises at least one member selected from a group consisting of ethylene, propylene, butene, isobutene, butadiene, isoprene, and styrene as a constituent unit.

Item 8.

The composition according to any one of Items 1 to 7, wherein the copolymer comprising the α,β-unsaturated carboxylic acid or the ester thereof as a constituent unit is an ethylene-α,β-unsaturated carboxylic acid copolymer.

Item 9.

The composition according to Item 8, wherein the ethylene-α,β-unsaturated carboxylic acid copolymer is an ethylene-(meth)acrylic acid copolymer.

Item 10.

A laminate comprising a paper substrate and a film on the paper substrate, the film being formed from the composition of any one of Items 1 to 9.

Item 11a.

A method for producing an aqueous dispersion composition of a copolymer comprising an α,β-unsaturated carboxylic acid or an ester thereof as a constituent unit, the method comprising

(1) mixing at least a copolymer having a heat of crystallization of -30 J/g or less and comprising an α,β-unsaturated carboxylic acid or an ester thereof as a constituent unit, ammonia, and water such that the concentration of the copolymer is 30 to 60 mass%, and that the amount of ammonia is 70 mol% or more based on the amount of carboxyl groups in the copolymer.

Item 11b.

The method for producing an aqueous dispersion composition according to Item 11a, further comprising

(2) applying a pressure of 0.1 to 2 MPa to the mixture obtained in step (1).

Item 12.

The method for producing an aqueous dispersion composition according to Item 11b, further comprising

(3) further adding water after the pressure application to adjust the concentration of the copolymer to 10 to 50 mass%.

Advantageous Effects of Invention

The present invention provides a method for producing an aqueous dispersion, the method comprising dispersing in water an olefin-$\alpha,\beta$-unsaturated carboxylic acid copolymer having a relatively small amount of $\alpha,\beta$-unsaturated carboxylic acid by using ammonia. The invention also provides the aqueous dispersion.
Furthermore, the present inventors also found that the use of the dispersion as a coating agent for coating paper makes it possible to obtain coated paper having not only excellent water resistance but also excellent blocking resistance and defibration properties (and thus excellent recyclability). The present invention thus also provides the coated paper.

Brief Description of Drawings

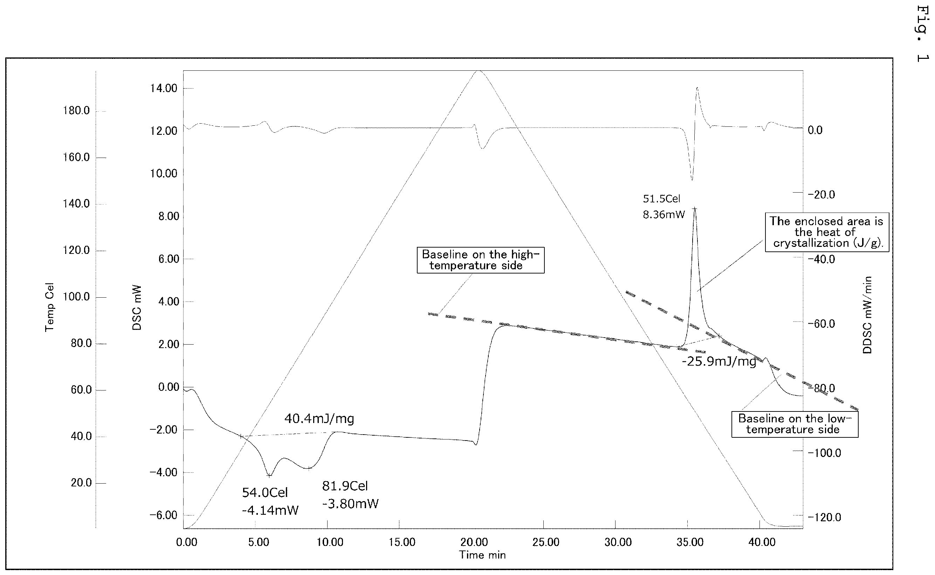

Fig. 1 shows an example of a schematic diagram for calculating the heat of crystallization of a polymer from the measurement results of the polymer obtained by using a differential scanning calorimeter. The area of a portion enclosed by a straight line connecting the point where the DSC curve departs from the baseline on the high-temperature side when the temperature is lowered from 200°C to 0°C and the point where the DSC curve returns again to the baseline on the low-temperature side, and the DSC curve is defined as the heat of crystallization (J/g).

Description of Embodiments

Below, each embodiment encompassed by the present disclosure is described in more detail. The present disclosure preferably encompasses, for example, an aqueous dispersion composition of a copolymer comprising an $\alpha,\beta$-unsaturated carboxylic acid or an ester thereof as a constituent unit, and a production method for the composition; however, the present disclosure is not limited to these, and encompasses everything disclosed herein and recognizable to those skilled in the art. The copolymer comprising an $\alpha,\beta$-unsaturated carboxylic acid or an ester thereof as a constituent unit may be referred to as "the copolymer (A)."
The aqueous dispersion composition of the copolymer (A) encompassed by the present disclosure comprises 10 mass% or more (preferably 10 to 50 mass%) of the copolymer (A). This aqueous dispersion composition encompassed by the present disclosure may be referred to below as "the composition of the present disclosure."
The copolymer (A) is a copolymer comprising one or more $\alpha,\beta$-unsaturated carboxylic acids as a constituent unit. For example, the copolymer (A) may be (i) a copolymer of one or two or more $\alpha,\beta$-unsaturated carboxylic acids or esters thereof with a monomer other than the one or two or more $\alpha,\beta$-unsaturated carboxylic acids or esters thereof, or ii) a copolymer of two or more $\alpha,\beta$-unsaturated carboxylic acids or esters thereof. The "two or more $\alpha,\beta$-unsaturated carboxylic acids or esters thereof" include the case of only two or more $\alpha,\beta$-unsaturated carboxylic acids, and the case of only two or more $\alpha,\beta$-unsaturated carboxylic acid esters, as well as the case of one or more $\alpha,\beta$-unsaturated carboxylic acids and one or more $\alpha,\beta$-unsaturated carboxylic acid esters.
Examples of $\alpha,\beta$-unsaturated carboxylic acids include acrylic acid, methacrylic acid, crotonic acid, maleic acid, fumaric acid, and itaconic acid. Among these, (meth)acrylic acid (i.e., methacrylic acid and/or acrylic acid) is more preferred. Further, examples of esters of $\alpha,\beta$-unsaturated carboxylic acids include alkyl esters having 1 to 10 (1, 2, 3, 4, 5, 6, 7, 8, 9, or 10) carbon atoms. The alkyl moiety of the alkyl esters may be linear or branched. More specific examples of esters of $\alpha,\beta$-unsaturated carboxylic acids include methyl esters, ethyl esters, butyl (in particular, n-butyl) esters, and 2-ethylhexyl esters. Examples of esters of $\alpha,\beta$-unsaturated carboxylic acids also include 2-methylaminoethyl esters and hydroxyethyl esters (in particular, 2-hydroxyethyl esters). Among these, more preferable examples of esters of α,β-unsaturated carboxylic acids include methyl (meth)acrylate, ethyl (meth)acrylate, and butyl (meth)acrylate.

Examples of monomers other than α,β-unsaturated carboxylic acids or esters thereof include ethylene, propylene, butene, isobutene, butadiene, isoprene, and styrene.

More specifically, the copolymer (A) is preferably, for example, a copolymer of ethylene and an α,β-unsaturated carboxylic acid or an ester thereof, or a copolymer of styrene and an α,β-unsaturated carboxylic acid or an ester thereof. Among these, an ethylene-α,β-unsaturated carboxylic acid copolymer is more preferred. More specifically, for example, the copolymer (A) is more preferably an ethylene-(meth)acrylic acid copolymer, a styrene-(meth)acrylic acid ester copolymer, or a styrene-(meth)acrylic acid-(meth)acrylic acid ester copolymer. In particular, an ethylene-α,β-unsaturated carboxylic acid copolymer is preferred. The ethylene-α,β-unsaturated carboxylic acid copolymer is particularly preferably an ethylene-(meth)acrylic acid copolymer.

The copolymer (A) may be used alone or in a combination of two or more.

The copolymer (A) has a heat of crystallization of -30 J/g or less, and preferably -60 to -30 J/g. The upper or lower limit of this range (-60 to -30 J/g) may be, for example, -59, -58, -57, -56, -55, -54, -53, -52, -51, -50, -49, -48, -47, -46, -45, -44, -43, -42, -41, -40, -39, -38, -37, -36, -35, -34, -33, -32, or -31 J/g. For example, the range may be -55 to -35 J/g.

Like the copolymer (A), polymers comprising a carboxylic acid or an ester thereof (in particular, copolymers comprising an α,β-unsaturated carboxylic acid or an ester thereof as a constituent unit) have the tendency that the smaller the amount of the carboxylic acid or ester thereof, the lower the heat of crystallization, and the larger the amount of the carboxylic acid or ester thereof, the easier it is to obtain its aqueous dispersion. This suggests that when the heat of crystallization is low, obtaining an aqueous dispersion tends to be difficult. The composition of the present disclosure is an aqueous dispersion composition in which a copolymer is dispersed in an excellent manner although the copolymer has a heat of crystallization as low as -30 J/g or less, and although it is thus difficult to disperse the copolymer in water.

As described above, in the copolymer (A), the smaller the amount of the carboxylic acid or ester thereof contained, the lower the heat of crystallization tends to be. Thus, a copolymer having a heat of crystallization of -30 J/g or less can be obtained by adjusting the amount of a carboxylic acid or ester thereof. That is, a copolymer having a heat of crystallization of -30 J/g or less can be obtained by adjusting the amount of the monomer having in the side chain a carboxylic acid or an ester thereof (more specifically, an α,β-unsaturated carboxylic acid or an ester thereof) from among the monomers used in the synthesis of the copolymer.

The heat of crystallization of the copolymer (A) is calculated from the area of a portion enclosed by a straight line connecting the point where the DSC curve departs from the baseline on the high-temperature side when the temperature is lowered from 200°C to 0°C and the point where the DSC curve returns again to the baseline on the low-temperature side, and the DSC curve.

The copolymer (A) is preferably, but is not limited to, a copolymer having a melt index (190°C, load: 2160 g) of about 50 to 400, and preferably about 60 to 300. Further, the copolymer (A) is preferably a copolymer having a melting point of about 85 to 100°C. The upper or lower limit of this range (85 to 100°C) may be, for example, 86, 87, 88, 89, 90, 91, 92, 93, 94, 95, 96, 97, 98, or 99°C. For example, the range may be 88 to 98°C. The melting point is measured by a differential scanning calorimetry method. More specifically, the measurement is performed using a differential scanning calorimeter (e.g., DSC7020, produced by SII NanoTechnology Inc.). About 10 mg of a measurement sample (copolymer (A)) is placed in an aluminum vessel for measurement, and the vessel is hermetically sealed. Among the endothermic peaks observed when the temperature is increased from 0°C to 200°C at a rate of 10°C/min under a nitrogen gas flow at a rate of 40 mL/min, the temperature of the peak top observed on the highest temperature side is defined as the melting point.

The copolymer (A) can be prepared by known methods or methods obvious from known methods. The copolymer (A) may also be purchased commercial products. For example, a commercial product of an ethylene-α,β-unsaturated carboxylic acid copolymer may be purchased for use. Examples of commercial products include Nucrel N1860, Nucrel N1530H, and Nucrel N1560 (produced by Dow-Mitsui Polychemicals Co., Ltd.).

It is preferred that the carboxyl groups (derived from the α,β-unsaturated carboxylic acid) contained in the copolymer (A) are appropriately neutralized.

When the carboxyl groups of the copolymer (A) are in a free state, the hydrophilicity is usually relatively low, and when the carboxyl groups are in a salt state, the hydrophilicity is usually relatively high. Thus, when neutralized with a base, the neutralized carboxyl groups in the copolymer will act as an emulsifier, making it relatively easy to produce an aqueous dispersion.

In the composition of the present disclosure and the production method for the composition, ammonia is used as a base for the neutralization. Ammonia can also be used in the form of, for example, ammonia gas or an aqueous ammonia solution.

Other bases, such as organic amines and alkali metal hydroxides, may further be used as long as the effects of the composition of the present disclosure described above are not impaired. However, these components are preferably not contained in the composition of the present disclosure. Examples of organic amines include methylamine, ethylamine, diethylamine, diethanolamine, and triethanolamine. Examples of alkali metal hydroxides include sodium hydroxide, potassium hydroxide, and lithium hydroxide.

The composition of the present disclosure preferably does not contain alcohol.

In the copolymer (A), the content of the unit derived from the $\alpha,\beta$-unsaturated carboxylic acid is not limited, and is, for example, about 2 to 15 mol%. The upper or lower limit of this range may be, for example, 3, 4, 5, 6, 7, 8, 9, 10, 11, 12, 13, or 14 mol%. For example, the range may be about 3 to 12 mol%.

The content of the unit derived from the $\alpha,\beta$-unsaturated carboxylic acid in the copolymer (A) can be determined by acid-base titration. More specifically, the content can be determined as follows. The copolymer (A) (0.5 g) and xylene (70 mL) are added to a flask, followed by heating with a hot stirrer at 150°C for 15 minutes for dissolution. After dissolution, the resulting product is cooled, and 20 mL of ethanol and 3 drops of phenolphthalein (ethanol solution) are added thereto at about 90°C. A titration is performed using 0.1 N potassium hydroxide (ethanol solution), and the point at which a reddish color is developed for 30 seconds is defined as the end point. The unsaturated carboxylic acid content is determined according to the following formula.

$$\text{Unsaturated carboxylic acid content (wt\%)} = [(V1 - V0) \times N \times E] \times 100/W$$

V1: Titration volume (ml)

V0: Blank titration volume (ml)

N: KOH concentration = 0.1 mol/l = 0.1 mmol/ml

E: Molecular weight of unsaturated carboxylic acid X g/mmol (For example, acrylic acid: X = 0.07206, methacrylic acid: 0.08609.)

W: Sample weight (g)

In particular, when the copolymer (A) is an ethylene-$\alpha,\beta$-unsaturated carboxylic acid copolymer, the content of the unit derived from the $\alpha,\beta$-unsaturated carboxylic acid is preferably, for example, about 2 to 15 mol% to achieve a good balance between non-polar properties derived from the ethylene unit and polar properties derived from the $\alpha,\beta$-unsaturated carboxylic acid.

The average particle size of the copolymer (A) in the composition of the present disclosure is preferably 1 $\mu$m or less or less than 1 $\mu$m. The lower limit of the average particle size is not limited and is, for example, 0.01 $\mu$m or more, and preferably 0.1 $\mu$m or more. The upper or lower limit of this range (0.01 to 1 $\mu$m) of the average particle size may be 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5, 0.51, 0.52, 0.53, 0.54, 0.55, 0.56, 0.57, 0.58, 0.59, 0.6, 0.61, 0.62, 0.63, 0.64, 0.65, 0.66, 0.67, 0.68, 0.69, 0.7, 0.71, 0.72, 0.73, 0.74, 0.75, 0.76, 0.77, 0.78, 0.79, 0.8, 0.81, 0.82, 0.83, 0.84, 0.85, 0.86, 0.87, 0.88, 0.89, 0.9, 0.91, 0.92, 0.93, 0.94, 0.95, 0.96, 0.97, 0.98, or 0.99 um. For example, the range may be 0.1 to 0.7 $\mu$m.

The average particle size is a value measured by a dynamic light scattering particle size distribution measurement method (Z-average (hydrodynamic diameter)). Specifically, the average particle size of the aqueous dispersion composition of the copolymer (A) is a value measured with a dynamic light scattering particle size distribution analyzer. Examples of the analyzer include a Zetasizer Nano ZS produced by Malvern Instruments Ltd. More specifically, 50 ml of distilled water is placed in a 100-ml beaker, 0.02 g of the aqueous dispersion composition of the copolymer to be measured is added thereto, the mixture is stirred with a spatula for dispersion, and the average particle size is measured with a dynamic light scattering particle size distribution analyzer.

The content of the copolymer (A) in the composition of the present disclosure is preferably 10 to 50 mass%. The upper or lower limit of this range may be, for example, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, or 49 mass%. For example, the range may be 15 to 45 mass%.

The composition of the present disclosure preferably has a viscosity of 1000 mPa·s or less at 25°C. The lower limit of the viscosity is not limited, and may be, for example, 10 mPa·s or more. The upper or lower limit of this range (10 to 1000 mPa·s) may be 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690, 700, 710, 720, 730, 740, 750, 760, 770, 780, 790, 800, 810, 820, 830, 840, 850, 860, 870, 880, 890, 900, 910, 920, 930, 940, 950, 960, 970, 980, or 990 mPa·s. The range may be, for example, 20 to 800 mPa·s.

The viscosity of the composition of the present disclosure is measured with a BH rotational viscometer. Specifically, the viscosity is determined by reading the viscosity value one minute after the rotor starts rotating at 25°C using rotor No. 3 by setting the rotation speed of the spindle rotor to 60 rpm. The rotor is appropriately set according to the viscosity. As a guide, the rotor for use is as follows: rotor No. 3 for less than 2000 mPa·s, rotor No. 4 for 2000 mPa·s or more and less than 5000 mPa·s, rotor No. 5 for 5000 mPa·s or more and less than 15000 mPa·s, rotor No. 6 for 15000 mPa·s or more and less than 40000 mPa·s, and rotor No. 7 for 40000 mPa·s or more.

The aqueous medium of the composition of the present disclosure for use is preferably water, and may be various types of water, such as tap water, industrial water, ion-exchanged water, deionized water, and pure water. Particularly preferred is deionized water or pure water.

The composition of the present disclosure may comprise other components as long as the effects are not impaired. Examples include antifoaming agents, viscosity modifiers, pH modifiers, surfactants, and antifungal agents. Examples further include, if necessary, antioxidants, fatty acid amides, waxes, silicone oils, and like blocking property improvement agents, and alcohols.

The composition of the present disclosure is useful, for example, as a binder or a coating agent. For example, the composition of the present disclosure can be applied to and dried on a substrate to form a film. The substrate is preferably, for example, paper, and more preferably packaging paper for food and beverages. This film is capable of preventing food or beverages from coming in direct contact with the paper (packaging paper). The film has a little adverse effect on food and beverages, and is preferable.

The present disclosure also preferably encompasses, for example, a laminate comprising a paper substrate and a film on the paper substrate, the film being formed from the composition of the present disclosure.

The composition of the present disclosure preferably has a water absorptiveness ($g/m^2$) of 10 or less, more preferably 5 or less, and still more preferably about 0.01 to 5. In particular, the water absorptiveness is measured with a water absorptiveness tester according to the Cobb method by using high-quality paper having a basis weight of 200 to 220 $g/m^2$, the high-quality paper being used 24 hours after the composition of the present disclosure is applied to the paper to a coating film thickness of 5 $\mu$m and dried in a hot air dryer at 100°C for 5 minutes (contact time of the coated paper with water: 5 minutes). The upper or lower limit of this range (0.01 to 5 $g/m^2$) may be, for example, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2, 2.05, 2.1, 2.15, 2.2, 2.25, 2.3, 2.35, 2.4, 2.45, 2.5, 2.55, 2.6, 2.65, 2.7, 2.75, 2.8, 2.85, 2.9, 2.95, 3, 3.05, 3.1, 3.15, 3.2, 3.25, 3.3, 3.35, 3.4, 3.45, 3.5, 3.55, 3.6, 3.65, 3.7, 3.75, 3.8, 3.85, 3.9, 3.95, 4.05, 4.1, 4.15, 4.2, 4.25, 4.3, 4.35, 4.4, 4.45, 4.5, 4.55, 4.6, 4.65, 4.7, 4.75, 4.8, 4.85, 4.9, or 4.95 $g/m^2$. For example, the range may be 0.05 to 1 $g/m^2$.

The composition of the present disclosure can be prepared, for example, by mixing specific amounts of the copolymer (A), ammonia, and water, optionally applying pressure and/or heating, and further adding water to dilute the mixture such that the copolymer has a specific concentration.

In the mixing of the copolymer (A), ammonia, and water, the concentration of the copolymer (A) is preferably adjusted to about 30 to 60 mass%. The upper or lower limit of this concentration range may be, for example, 31, 32, 33, 34, 35, 36, 37, 38, 39, 40, 41, 42, 43, 44, 45, 46, 47, 48, 49, 50, 51, 52, 53, 54, 55, 56, 57, 58, or 59 mass%. For example, the concentration range may be 35 to 55 mass%.

Ammonia is preferably used in an amount of 70 mol% or more, and more preferably 70 to 300 mol%, based on the amount of the carboxyl groups (100 mol%) in the copolymer (A). The upper or lower limit of this range (70 to 300 mol%) may be, for example, 75, 80, 85, 90, 95, 100, 105, 110, 115, 120, 125, 130, 135, 140, 145, 150, 155, 160, 165, 170, 175, 180, 185, 190, 195, 200 205, 210, 215, 220, 225, 230, 235, 240, 245, 250, 255, 260, 265, 270, 275, 280, 285, 290, or 295 mol%. For example, the range may be 80 to 250 mol%. The mixing of ammonia is preferably performed by using aqueous ammonia.

For example, when the copolymer (A) for use in the preparation of the composition of the present disclosure is an olefin-$\alpha$,$\beta$-unsaturated carboxylic acid copolymer, and the amount of the unsaturated carboxylic acid used in the preparation of this copolymer is 1 mol, the use of 2 mol of ammonia means the use of 200 mol% of ammonia based on the amount of the carboxyl groups of the copolymer (A).

The mixture obtained by mixing the copolymer (A), ammonia, and water is subjected to pressure application. The pressure application to the mixture is preferably performed while the mixture is mixed (e.g., stirred). The pressure application is preferably, for example, about 0.1 to 2 MPa. The upper or lower limit of this range may be, for example, 0.2, 0.3, 0.4, 0.5, 0.6, 0.7, 0.8, 0.9, 1, 1.1, 1.2, 1.3, 1.4, 1.5, 1.6, 1.7, 1.8, or 1.9 MPa. For example, the range may be 0.2 to 1.5 MPa.

The pressure application may be performed by, for example, introducing an inert gas into a sealed, pressure-resistant vessel in which stirring can be performed while the mixture is placed in the vessel. Examples of inert gases include nitrogen gas. Examples of the vessel include pressure-resistant autoclaves equipped with a stirrer.

Heating is preferably performed, if necessary, during the pressure application. For example, heating is preferably performed to a temperature equal to or higher than the temperature at which the copolymer (A) softens in an aqueous medium. More specifically, for example, heating is preferably performed to about 80 to 150°C, and more preferably about 90 to 140°C. When the copolymer (A) is an ethylene-(meth)acrylic acid copolymer, it is particularly desirable to heat the copolymer to this temperature (in particular, 90 to 110°C) for aging.

After cooling, the pressure is returned to ordinary pressure, and water is preferably added to the resulting mixture for dilution, if necessary. In particular, when the concentration of the copolymer (A) in the resulting mixture is greater than 50 mass%, dilution is necessary. When the concentration of the copolymer (A) in the resulting mixture is greater than 10 mass% and 50 mass% or less, dilution is not necessarily required but is preferably performed. When dilution is performed, the content of the copolymer (A) is adjusted to 10 to 50 mass%. If heating was performed during the pressure application, it is preferred to first cool the temperature to 90°C or lower (e.g., 90 to 80°C), then release the pressure from the inside of the vessel to return the pressure to ordinary pressure, and if necessary, further add water. While dilution is performed, mixing (stirring) is preferably performed, as required.

By performing the above steps, an aqueous dispersion composition in which the copolymer (A) is stably dispersed is suitably obtained. When used as a coating agent, the aqueous dispersion composition has not only excellent water resistance but also excellent blocking resistance and excellent defibration properties.

In the production process, it is possible to use a surfactant, in particular, to help dispersion to the extent that the effects of the composition of the present disclosure are not impaired; however, according to the present disclosure, an aqueous dispersion composition in which the copolymer (A) is stably dispersed can be provided even without the particular use of a surfactant.

In the present specification, the term "comprise" or "contain" includes the meanings of consisting essentially of and consisting of. Further, the present disclosure includes any combination of the constituent requirements described here.

In addition, the various characteristics (properties, structures, functions, etc.) described in each embodiment of the present disclosure described above may be combined in any way in specifying the subjects encompassed by the present disclosure. In other words, the present disclosure encompasses all the subjects comprising all combinations of the combinable characteristics described in the present specification.

Examples

The embodiments of the present disclosure are described with reference to examples in more detail below. However, the embodiments of the present disclosure are not limited to the following examples.

Measurement of Heat of Crystallization and Melting Point

The measurement was performed using a differential scanning calorimeter (DSC7020, produced by SII NanoTechnology Inc.). About 10 mg of a measurement sample was placed in an aluminum vessel for measurement, and the vessel was hermetically sealed. Thereafter, under a nitrogen gas flow at a rate of 40 mL/min, the DSC curve was obtained by increasing the temperature from 0°C to 200°C at a rate of 10°C/min, and then lowering the temperature from 200°C to 0°C at a rate of 10°C/min.

The heat of crystallization was calculated from the area of a portion enclosed by a straight line connecting the point where the DSC curve departed from the baseline on the high-temperature side when the temperature was lowered from 200°C to 0°C and the point where the DSC curve returned again to the baseline on the low-temperature side, and the DSC curve. Fig. 1 shows an example of a schematic diagram for the calculation.

The melting point was defined as the temperature at the peak top observed on the highest temperature side from among the endothermic peaks observed when the temperature was increased from 0°C to 200°C.

Measurement of Particle Size

The average particle size was measured by a dynamic light scattering particle size distribution measurement method. Specifically, the average particle size of an aqueous dispersion composition was measured with a dynamic light scattering particle size distribution analyzer. The analyzer for use was a Zetasizer Nano ZS produced by Malvern Instruments Ltd. This analyzer measures the diffusion of particles moving by Brownian motion, and based on the measurement results, calculates the particle size from the diffusion coefficient using the cumulant method from the autocorrelation function obtained by photon correlation spectroscopy using the Stokes-Einstein formula, and defines it as the average particle size, Z-average (hydrodynamic diameter) X nm. Specifically, 50 ml of distilled water was placed in a 100-ml beaker, 0.02 g of the aqueous dispersion composition of the copolymer to be measured was added thereto, the mixture was stirred with a spatula for dispersion, and the average particle size was measured with a dynamic light scattering particle size distribution analyzer.

Measurement of Viscosity

The viscosity of the composition was measured with a BH rotational viscometer. Specifically, the viscosity was determined by reading the viscosity value one minute after the rotor started rotating at 25°C by setting the rotation speed of the spindle rotor to 60 rpm. The rotor was appropriately set according to the viscosity. As a guide, the rotor for use was as follows: rotor No. 3 for less than 2000 mPa·s, rotor No. 4 for 2000 mPa·s or more and less than 5000 mPa·s, rotor No. 5 for 5000 mPa·s or more and less than 15000 mPa·s, rotor No. 6 for 15000 mPa·s or more and less than 40000 mPa·s, and rotor No. 7 for 40000 mPa·s or more.

An aqueous dispersion composition was immersed in a constant-temperature water bath whose temperature was adjusted to be constant at 25°C, and the viscosity of the aqueous dispersion was measured at 25°C. The viscosity was measured using a Brookfield DV-II+ with rotor No. 3 at 60 rpm.

Measurement of Solids Content (mass%)

One gram of an aqueous dispersion composition was weighed and dried in a hot air dryer (DRE320DR, produced by Advantec) at 130°C for 3 hours to obtain a dry solid. The solids content (mass%) was calculated according to the following formula.

$$\text{Solids content (mass\%)} = \frac{\text{Dry solid (g)}}{\text{Aqueous dispersion composition (g)}} \times 100$$

Production of Coated Paper

The aqueous dispersion composition was applied to high-quality paper having a basis weight of 209 g/m$^2$ (NPI high quality, Nippon Paper Industries Co., Ltd.) with a bar coater to a coating film thickness of 5 $\mu$m. Then, drying was performed in a hot-air dryer at 100°C for 5 minutes. After drying, the coated paper was allowed to stand in a room for at least 24 hours, and the water resistance, blocking resistance, and recyclability of the resulting coated paper were evaluated.

Evaluation of Water Resistance

As an indicator of water resistance of the coated paper, the water absorptiveness was measured with a water absorptiveness tester (trade name: Gurley-type water absorptiveness tester, Yasuda Seiki Seisakusho, Ltd.) based on the Cobb method in accordance with JIS P 8140 (1998). The contact time of the coated paper with water was set to 5 minutes.

Evaluation of Blocking Resistance

Two sheets of the produced coated paper were provided, the coated surfaces of the sheets were overlapped so as to face each other, and thermocompression bonding was performed at a bonding temperature of 70°C, pressure of 0.5 MPa, and bonding time of 2 hours. After thermocompression bonding, the thermocompression-bonded sample was allowed to stand in a room for at least 24 hours, and peeling was then performed by hand to evaluate the blocking resistance based on the peeled state of the sample.

Evaluation Criteria

A: Interfacial peeling was easily performed by hand.
B: Adhesion was strong, but interface peeling was possible.
C: The paper substrate was broken.

Evaluation of Defibration Properties

The defibration properties of the produced coated paper was evaluated according to the following method.
Five grams of the coated paper was added to 500 g of pure water and stirred at 3000 rpm for 30 minutes using a disperser. After stirring, the appearance of the coated paper was visually observed to evaluate defibration properties.

Evaluation Criteria

> Good (A): The paper was finely dispersed in water.
> Poor (B): The shape of the coated paper was confirmed in the water.

In the following Examples, the ethylene-α,β-unsaturated carboxylic acid copolymers listed in Table 1 were used as the olefin-α,β-unsaturated carboxylic acid copolymer.

Example 1

84 g of EMAA-1, 9.6 g of 28% aqueous ammonia as a neutralizer, and 107.3 g of water were placed in a 1000-mL pressure-resistant vessel equipped with a stirrer. After the vessel was hermetically sealed, pressure was increased by introducing nitrogen gas to 0.6 MPa as shown by a pressure gauge equipped with the pressure-resistant vessel. Thereafter, the temperature was increased to 95°C while the mixture was stirred at 500 rpm, and stirring was performed for 4 hours while the interior of the vessel was kept at 95°C. Subsequently, the temperature was lowered to 90°C while stirring was performed at 500 rpm, and the pressure remaining in the vessel was released to return the pressure to ordinary pressure. Then, 199.0 g of water was added from the side tube of the vessel, and the temperature was lowered to 50°C. The contents were filtered through a polyethylene 80-mesh sieve to obtain an aqueous dispersion. The resulting aqueous dispersion composition had a solids content of 21.0 mass%, a particle size of 202 nm, and a viscosity of 684 mPa·s. The resulting aqueous dispersion was applied to high-quality paper to create coated paper to evaluate the water resistance, blocking resistance, and defibration properties. Tables 2 and 3 show the obtained results.

Example 2

72 g of EMAA-1, 11.9 g of 28% aqueous ammonia as a neutralizer, and 121.3 g of water were placed in a 1000-mL pressure-resistant vessel equipped with a stirrer, and the vessel was hermetically sealed. Thereafter, the temperature was increased to 95°C while the mixture was stirred at 500 rpm, and stirring was performed for 4 hours while the interior of the vessel was kept at 95°C. Subsequently, the temperature was lowered to 90°C while stirring was performed at 500 rpm, and the pressure remaining in the vessel was released to return the pressure to ordinary pressure. Then, 154.8 g of water was added from the side tube of the vessel, and the temperature was lowered to 50°C. The contents were filtered through a polyethylene 80-mesh sieve to obtain an aqueous dispersion. The resulting aqueous dispersion composition had a solids content of 19.9 mass%, a particle size of 132 nm, and a viscosity of 886 mPa·s.

Example 3

82 g of EMAA-2, 17.4 g of 28% aqueous ammonia as a neutralizer, and 104.2 g of water were placed in a 1000-mL pressure-resistant vessel equipped with a stirrer. After the vessel was hermetically sealed, pressure was increased by introducing nitrogen gas to 0.5 MPa as shown by a pressure gauge equipped with the pressure-resistant vessel. Thereafter, the temperature was increased to 95°C while the mixture was stirred at 500 rpm, and stirring was performed for 4 hours while the interior of the vessel was kept at 95°C. Subsequently, the temperature was lowered to 90°C while stirring was performed at 500 rpm, and the pressure remaining in the vessel was released to return the pressure to ordinary pressure. Then, 206.4 g of water was added from the side tube of the vessel, and the temperature was lowered to 50°C. The contents were filtered through a polyethylene 80-mesh sieve to obtain an aqueous dispersion. The resulting aqueous dispersion composition had a solids content of 20.0 mass%, a particle size of 193 nm, and a viscosity of 285 mPa·s. The resulting aqueous dispersion was applied to high-quality paper to create coated paper to evaluate the water resistance, blocking resistance, and defibration properties. Tables 2 and 3 show the obtained results.

Example 4

92 g of EMAA-3, 19.5 g of 28% aqueous ammonia as a neutralizer, and 89.6 g of water were placed in a 1000-mL pressure-resistant vessel equipped with a stirrer. After the vessel was hermetically sealed, pressure was increased by introducing nitrogen gas to 0.5 MPa as shown by a pressure gauge equipped with the pressure-resistant vessel. Thereafter, the temperature was increased to 95°C while the mixture was stirred at 500 rpm, and stirring was performed for 4 hours while the interior of the vessel was kept at 95°C. Subsequently, the temperature was lowered to 90°C while stirring was performed at 500 rpm, and the pressure remaining in the vessel was released to return the pressure to ordinary pressure. Then, 258.9 g of water was added from the side tube of the vessel, and the temperature was lowered to 50°C. The contents were filtered through a polyethylene 80-mesh sieve to obtain an aqueous dispersion. The resulting aqueous dispersion composition had a solids content of 20.0 mass%, a particle size of 123 nm, and a viscosity of 31 mPa·s. The resulting aqueous dispersion was applied to high-quality paper to create coated paper to evaluate the water resistance, blocking resistance, and defibration properties. Tables 2 and 3 show the obtained results.

The solids contents (mass%) in these Examples can be considered to be the concentrations of the ethylene-$\alpha,\beta$-unsaturated carboxylic acid copolymers in the aqueous dispersion compositions.

Comparative Example 1

98 g of EAA-1, 11.4 g of 28% aqueous ammonia as a neutralizer, and 290.6 g of water were placed in a 1000-mL pressure-resistant vessel equipped with a stirrer, and the vessel was hermetically sealed. Thereafter, the temperature was increased to 95°C while the mixture was stirred at 500 rpm, and stirring was performed for 4 hours while the interior of the vessel was kept at 95°C, followed by cooling to 50°C. The contents were filtered through a polyethylene 80-mesh sieve to obtain an aqueous dispersion. The resulting aqueous dispersion composition had a solids content of 24.5 mass%, a particle size of 100 nm, and a viscosity of 140 mPa·s. The resulting aqueous dispersion was applied to high-quality paper to create coated paper to evaluate the water resistance, blocking resistance, and defibration properties. Tables 2 and 3 show the obtained results.

Comparative Example 2

98 g of EMAA-2, 41 g of a 10% aqueous sodium hydroxide solution as a neutralizer, and 359 g of water were placed in a 1000-mL pressure-resistant vessel equipped with a stirrer, and the vessel was hermetically sealed. Thereafter, the temperature was increased to 95°C while the mixture was stirred at 500 rpm, and stirring was performed for 4 hours while the interior of the vessel was kept at 95°C, followed by cooling to 50°C. The contents were filtered through a polyethylene 80-mesh sieve to obtain an aqueous dispersion. The resulting aqueous dispersion composition had a solids content of 25.0 mass%, a particle size of 72 nm, and a viscosity of 573 mPa·s. The resulting aqueous dispersion was applied to high-quality paper to create coated paper to evaluate the water resistance, blocking resistance, and defibration properties. Tables 2 and 3 show the obtained results.

Comparative Example 3

98 g of EMAA-3, 41 g of a 10% aqueous sodium hydroxide solution as a neutralizer, and 359 g of water were placed in a 1000-mL pressure-resistant vessel equipped with a stirrer, and the vessel was hermetically sealed. Thereafter, the temperature was increased to 95°C while the mixture was stirred at 500 rpm, and stirring was performed for 4 hours while the interior of the vessel was kept at 95°C, followed by cooling to 50°C. The contents were filtered through a polyethylene 80-mesh sieve to obtain an aqueous dispersion. The resulting aqueous dispersion composition had a solids content of 25.0 mass%, a particle size of 75 nm, and a viscosity of 600 mPa·s. The resulting aqueous dispersion was applied to high-quality paper to create coated paper to evaluate the water resistance, blocking resistance, and defibration properties. Tables 2 and 3 show the obtained results.

Table 1

| Resin | Resin structure | Content of the unit derived from (meth)acrylic acid (mol%) | Melt index 190°C, load: 2160 g | Melting point (°C) | Heat of crystallization (J/g) |
|---|---|---|---|---|---|
| EMAA-1 | Ethylene-methacrylic acid copolymer | 6.7 | 60 | 93.5 | -41.1 |
| EMAA-2 | Ethylene-methacrylic acid copolymer | 5.4 | 60 | 92.1 | -42.7 |
| EMAA-3 | Ethylene-methacrylic acid copolymer | 5.4 | 300 | 93.9 | -43.5 |

(continued)

| Resin | Resin structure | Content of the unit derived from (meth)acrylic acid (mol%) | Melt index 190°C, load: 2160 g | Melting point (°C) | Heat of crystallization (J/g) |
|---|---|---|---|---|---|
| EAA-1 | Ethylene-acrylic acid copolymer | 8.9 | 300 | 81.9 | -25.9 |

Table 2

| | Production step | | | | Produced aqueous composition | | |
|---|---|---|---|---|---|---|---|
| | Base for neutralization | Concentration of resin | Molar ratio of ammonia used to the amount of $\alpha,\beta$-unsaturated carboxylic acid | Pressure application | Solids content in the composition | Average particle size of resin | Viscosity |
| | | wt% | mol% | MPa | wt% | nm | mPa·s |
| Ex. 1 | Ammonia | 41.8 | 90 | 0.6 | 21.0 | 202 | 684 |
| Ex. 2 | Ammonia | 35.1 | 130 | None | 19.9 | 132 | 886 |
| Ex. 3 | Ammonia | 41.0 | 200 | 0.5 | 20.0 | 193 | 285 |
| Ex. 4 | Ammonia | 45.7 | 200 | 0.5 | 20.0 | 123 | 31 |
| Com. Ex. 1 | Ammonia | 29.0 | 60 | None | 24.5 | 100 | 140 |
| Com. Ex. 2 | NaOH | 24.5 | 60 | None | 25.0 | 72 | 573 |
| Com. Ex. 3 | NaOH | 24.5 | 60 | None | 25.0 | 75 | 600 |

Table 3

| | Water resistance Cobb value (g/m$^2$) | Blocking resistance | Defibration properties |
|---|---|---|---|
| Ex. 1 | 0.3 | A | A |
| Ex. 2 | 0.2 | A | A |
| Ex. 3 | 0.2 | A | A |
| Ex. 4 | 0.2 | A | A |
| Com. Ex. 1 | 0.3 | C | A |
| Com. Ex. 2 | 18.6 | A | A |
| Com. Ex. 3 | 22.0 | A | A |

**Claims**

1. An aqueous dispersion composition of a copolymer comprising an $\alpha,\beta$-unsaturated carboxylic acid or an ester thereof as a constituent unit,

   the composition comprising ammonia,
   the copolymer having a heat of crystallization of -30 J/g or less, and

the copolymer being contained in an amount of 10 to 50 mass%.

2. The composition according to claim 1, wherein the copolymer has an average particle size of 0.01 to 1 $\mu$m.

3. The composition according to claim 1 or 2, wherein the copolymer has a heat of crystallization of -30 to -55 J/g.

4. The composition according to any one of claims 1 to 3, which is a coating composition.

5. The composition according to any one of claims 1 to 4, having a water absorptiveness of 10 g/m$^2$ or less, the water absorptiveness being measured according to the Cobb method by using high-quality paper having a basis weight of 200 to 220 g/m$^2$, the high-quality paper being used 24 hours after the composition is applied to the paper to a coating film thickness of 5 $\mu$m and dried with hot air at 100°C for 5 minutes, and by setting a contact time of the coated paper with water to 5 minutes.

6. The composition according to any one of claims 1 to 5, wherein the $\alpha,\beta$-unsaturated carboxylic acid is at least one member selected from a group consisting of acrylic acid, methacrylic acid, crotonic acid, maleic acid, fumaric acid, and itaconic acid, and
the ester of $\alpha,\beta$-unsaturated carboxylic acid is a $C_1$-$C_{10}$ alkyl ester of $\alpha,\beta$-unsaturated carboxylic acid.

7. The composition according to any one of claims 1 to 6, wherein the copolymer comprising the $\alpha,\beta$-unsaturated carboxylic acid or the ester thereof as a constituent unit further comprises at least one member selected from a group consisting of ethylene, propylene, butene, isobutene, butadiene, isoprene, and styrene as a constituent unit.

8. The composition according to any one of claims 1 to 7, wherein the copolymer comprising the $\alpha,\beta$-unsaturated carboxylic acid or the ester thereof as a constituent unit is an ethylene-$\alpha,\beta$-unsaturated carboxylic acid copolymer.

9. The composition according to claim 8, wherein the ethylene-$\alpha,\beta$-unsaturated carboxylic acid copolymer is an ethylene-(meth)acrylic acid copolymer.

10. A laminate comprising a paper substrate and a film on the paper substrate, the film being formed from the composition of any one of claims 1 to 9.

11. A method for producing an aqueous dispersion composition of a copolymer comprising an $\alpha,\beta$-unsaturated carboxylic acid or an ester thereof as a constituent unit, the method comprising

(1) mixing at least a copolymer having a heat of crystallization of -30 J/g or less and comprising an $\alpha,\beta$-unsaturated carboxylic acid or an ester thereof as a constituent unit, ammonia, and water such that the concentration of the copolymer is 30 to 60 mass%, and that the amount of ammonia is 70 mol% or more based on the amount of carboxyl groups in the copolymer; and
(2) applying a pressure of 0.1 to 2 MPa to the obtained mixture.

12. The method for producing an aqueous dispersion composition according to claim 11, further comprising
(3) further adding water after the pressure application to adjust the concentration of the copolymer to 10 to 50 mass%.

Fig. 1

## INTERNATIONAL SEARCH REPORT

| | International application No. |
|---|---|
| | PCT/JP2021/026203 |

A. CLASSIFICATION OF SUBJECT MATTER
B32B 27/10(2006.01)i; B32B 27/28(2006.01)i; C08F 8/44(2006.01)i; C08J
3/03(2006.01)i; C08L 23/08(2006.01)i; C08L 33/00(2006.01)i; C09D
123/08(2006.01)i; C09D 133/00(2006.01)i; C09D 7/61(2018.01)i
FI:      C08L33/00; B32B27/10; B32B27/28 101; C08L23/08; C08F8/44;
         C09D133/00; C09D7/61; C09D123/08; C08J3/03 CES; C08J3/03 CEY
According to International Patent Classification (IPC) or to both national classification and IPC

B. FIELDS SEARCHED

Minimum documentation searched (classification system followed by classification symbols)
C08J3/03-3/07; C08L23/08; C08L33/02-33/16

Documentation searched other than minimum documentation to the extent that such documents are included in the fields searched
Published examined utility model applications of Japan          1922–1996
Published unexamined utility model applications of Japan       1971–2021
Registered utility model specifications of Japan               1996–2021
Published registered utility model applications of Japan       1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 6-872 B2 (MITSUBISHI YUKA KABUSHIKI KAISHA) 05 January 1994 (1994-01-05) claims, comparative example 6, tables 1, 2 | 1, 3, 5-9<br>2, 4, 10-12 |
| X<br>A | WO 2011/096341 A1 (DU PONT-MITSUI POLYCHEMICALS CO., LTD.) 11 August 2011 (2011-08-11) claims, comparative examples 201, 301, tables 2, 3 | 1, 3, 5-9<br>2, 4, 10-12 |
| X | JP 2009-91426 A (UNITIKA LTD.) 30 April 2009 (2009-04-30) claims, paragraphs [0013], [0022], [0040], [0042], [0062], example 4, table 2 | 1-10 |
| Y | claims, paragraphs [0013], [0022], [0040], [0042], [0062], example 4, table 2 | 11, 12 |
| Y<br>A | JP 2009-13334 A (UNITIKA LTD.) 22 January 2009 (2009-01-22) claims, paragraphs [0052], [0059] | 11, 12<br>1-10 |

☒  Further documents are listed in the continuation of Box C.      ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 September 2021 (10.09.2021) | 21 September 2021 (21.09.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

EP 4 183 578 A1

**INTERNATIONAL SEARCH REPORT**

International application No.

PCT/JP2021/026203

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2005-8813 A (UNITIKA LTD.) 13 January 2005<br>(2005-01-13) claims, paragraphs [0032], [0033],<br>[0043] | 11, 12<br>1-10 |

Form PCT/ISA/210 (continuation of second sheet) (January 2015)

16

**INTERNATIONAL SEARCH REPORT**
Information on patent family members

International application No.

PCT/JP2021/026203

| Patent Documents referred in the Report | Publication Date | Patent Family | Publication Date |
|---|---|---|---|
| JP 6-872 B2 | 05 Jan. 1994 | (Family: none) | |
| WO 2011/096341 A1 | 11 Aug. 2011 | US 2013/0012632 A1 claims, comparative examples 201, 301, tables 2, 3 EP 2535368 A1 CN 102762640 A KR 10-2012-0112699 A | |
| JP 2009-91426 A | 30 Apr. 2009 | (Family: none) | |
| JP 2009-13334 A | 22 Jan. 2009 | (Family: none) | |
| JP 2005-8813 A | 13 Jan. 2005 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S50135141 A
- WO 2016076130 A
- JP 2001139737 A